# EUROPÄISCHE PATENTANMELDUNG

(11) **EP 3 571 938 A1**
(43) Veröffentlichungstag der Anmeldung: **27.11.2019**
(21) Anmeldenummer: 18187460.3
(22) Anmeldetag: 06.08.2018
(51) Int. Cl.: A23P 30/40, A47J 43/07, A23G 3/02, B01F 3/04

(54) **EMULGIERVORRICHTUNG**

(30) Priorität: 24.05.2018 DE 102018004162
(71) Anmelder: Friedrichs, Uwe, 31535 Neustadt (DE)
(72) Erfinder: Friedrichs, Uwe, 31535 Neustadt (DE)
(74) Vertreter: Holz, Christian

(57) **Zusammenfassung**

Die vorliegende Erfindung betrifft eine Emulgiervorrichtung (1) mit wenigstens einem Behälter (2) mit einem Innenraum (22) zur Aufnahme einer zu emulgierenden Flüssigkeit, wobei die Emulgiervorrichtung (1) ausgebildet ist, die im Innenraum (22) des Behälters (2) aufgenommene Flüssigkeit derart zu erwärmen, dass die Flüssigkeit emulgieren kann. Die erfindungsgemäße Emulgiervorrichtung (1) ist dadurch gekennzeichnet, dass die Emulgiervorrichtung (1) ferner ausgebildet ist, die im Innenraum (22) des Behälters (2) aufgenommene emulgierte Flüssigkeit aktiv abzukühlen.

## Beschreibung

Die vorliegende Erfindung betrifft eine Emulgiervorrichtung gemäß des Oberbegriffs des Patentanspruchs 1.

Im Bereich der Lebensmittelherstellung wie z.B. in Konditoreien, in Bäckereien und in der Gastronomie ist es für die Herstellung bestimmter Lebensmittel wie z.B. Cremes, Schäumen oder Mousses erforderlich, Emulsionen herzustellen. Eine Emulsion ist ein fein verteiltes Gemisch zweier normalerweise nicht mischbarer Flüssigkeiten ohne sichtbare Entmischung, bei welcher eine Flüssigkeit als kleine Tröpfen verteilt in der anderen Flüssigkeit aufgenommen wird. Eine der beiden Flüssigkeiten kann auch Luft sein. Im Bereich der Lebensmittel sind kalte Emulsionen auf Basis von Fett und Luft z.B. als geschlagene Sahne sowie warme Emulsionen aus Lezithin wie z.B. aus Eigelb und Luft bekannt.

Zur Herstellung einer warmen Emulsion aus Eigelb als Lezithin und Luft wird das Eigelb, ggfs. zuvor mit anderen Zutaten wie z.B. Zucker, Aromen und bzw. oder alkoholischen Flüssigkeiten vermischt, als Masse unter Wärmezufuhr aufgeschlagen. Das Aufschlagen kann von Hand mittels eines Schlagbesens oder mittels eines Küchengeräts wie z.B. mit einer Rührmaschine erfolgen. Die Zufuhr von Wärme kann bei Verwendung eines Schlagbesens z.B. dadurch erfolgen, dass das Gefäß wie z.B. ein Kessel oder eine Schüssel, welches die Eigelbmasse enthält, mittels einer Wärmequelle wie z.B. durch Wasserdampf, durch ein Wasserbad, durch eine elektrische Beheizung oder durch eine offene Gasflamme von unten erwärmt und die Eigelbmasse stetig und schnell mittels des Schlagbesens durchgerührt wird. Diese Art des Emulgierens, d.h. des Herstellens einer Emulsion, ist für vergleichsweise kleine Mengen geeignet. Für das Emulgieren vergleichsweise großer Mengen an Eigelb kann eine Rührmaschine z.B. mit einem Planetenrührwerk verwendet werden, welche beheizbar ausgebildet ist, so dass die Wärmezufuhr z.B. über den beheizten Boden des Kessels der Rückmaschine erfolgen kann. In jedem Fall wird die Eigelbmasse auf mindestens 67°C erwärmt, um zu gerinnen und um zu binden.

Mittels einer derartigen Eigelbemulsion können z.B. in einer Konditorei verschiedene Produkte wie Mousses, Cremes wie z.B. Bayrisch Creme, Parfaits sowie Biskuits wie z.B. Genueser Biskuit hergestellt werden. In Küchen basieren die Holländische Soße, auch Sc. Hollandaise genannt, oder Eis auf Eigelbemulsionen.

Zur Weiterverarbeitung der warmen Eigelbemulsion zu z.B. den zuvor genannten Lebensmitteln ist es üblicherweise erforderlich, die warme Eigelbemulsion abzukühlen, um z.B. geschlagene Sahne unter die Eigelbemulsion unterarbeiten zu können. Lediglich die Sc. Hollandaise sowie deren Ableitungen werden im erwärmten Zustand weiterverarbeitet.

Da geschlagene Sahne, auch Schlagsahne oder Schlagrahm genannt, üblicherweise eine Temperatur von ca. 4°C aufweist und maximal eine Temperatur von ca. 8°C aufweisen darf, ohne zu zerlaufen, muss die warme Eigelbemulsion von ca. 67°C bis 70°C auf unter 8°C und vorzugsweise auf ca. 4°C herabgekühlt werden, um die geschlagene Sahne unterarbeiten zu können.

Dies erfolgt üblicherweise durch ein Wasserbad, welches z.B. durch die Zugabe von Eiswürfeln eine entsprechend niedrige Temperatur aufweist und in welches das Gefäß wie z.B. der Kessel oder die Schüssel mit der warmen Eigelbemulsion eingetaucht wird.

Nachteilig hieran ist, dass der Abkühlvorgang der warmen Eigelbemulsion von ca. 67°C bis 70°C auf unter 8°C und vorzugsweise auf ca. 4°C vergleichsweise lange dauert, da sich die Temperatur der Eigelbemulsion um so langsamer reduziert, desto geringer der verbleibende Temperaturunterschied zum Wasserbad ist. Dies führt insbesondere dann zu einer langen Zeitdauer der Abkühlung, wenn die Eigelbemulsion die optimale Temperatur von ca. 4°C erreichen soll.

Eine Aufgabe der vorliegenden Erfindung ist es, eine Emulgiervorrichtung der eingangs beschriebenen Art bereitzustellen, so dass die Abkühlung der emulgierten Flüssigkeit beschleunigt werden kann. Dies soll vorzugsweise möglichst einfach, kostengünstig und bzw. oder energiesparsam erfolgen. Die Abkühlung soll vorzugsweise auf eine Temperatur von unter 8°C, besonders vorzugsweise auf ca. 4°C, erfolgen können. Zumindest soll eine Alternative zu bekannten Emulgiervorrichtungen geschaffen werden.

Die Aufgabe wird erfindungsgemäß durch eine Emulgiervorrichtung mit den Merkmalen des Patentanspruchs 1 gelöst. Vorteilhafte Weiterbildungen sind in den Unteransprüchen beschrieben.

Die vorliegende Erfindung betrifft somit eine Emulgiervorrichtung mit wenigstens einem Behälter mit einem Innenraum zur Aufnahme einer zu emulgierenden Flüssigkeit, wobei die Emulgiervorrichtung ausgebildet ist, die im Innenraum des Behälters aufgenommene Flüssigkeit derart zu erwärmen, dass die Flüssigkeit emulgieren kann.

Die erfindungsgemäße Emulgiervorrichtung ist dadurch gekennzeichnet, dass die Emulgiervorrichtung ferner ausgebildet ist, die im Innenraum des Behälters aufgenommene emulgierte Flüssigkeit aktiv abzukühlen. Die emulgierte Flüssigkeit kann aufgrund ihres emulgierten Zustands auch als emulgierte Masse oder kurz als Masse bezeichnet werden.

Der vorliegenden Erfindung liegt dabei die Erkenntnis zugrunde, dass bereits Maschinen bekannt sind, welche kalte bzw. gekühlte Fett-Luft-Emulsionen, wie z.B. geschlagene Sahne, herstellen können. Derartige kalte Fett-Luft-Emulsionen können beispielsweise mit einem Schlagbesen von Hand oder mit einem Rührgerät hergestellt werden. Somit kann eine derartige Maschine wie z.B. ein Rührgerät um die Funktion der Erwärmung erweitert werden, um mittels ein und derselben Maschine sowohl kalte als auch warme Emulsionen herstellen zu können. Hierbei können die beiden Temperaturbereiche abwechselnd bzw. nacheinander genutzt werden, um beispielsweise zuerst eine warme Emulsion zu erzeugen und diese anschließend durch die Emulgiervorrichtung abzukühlen. Somit können mit ein und derselben Maschine zwei Arbeitsschritte hintereinander ausgeführt werden, ohne dass hierfür zwei Maschinen benötigt werden und auch ohne die Emulsion von einer Maschine bzw. dessen Behälter in dem Behälter einer zweiten Maschine geben zu müssen. Ferner kann eine warme Emulsion innerhalb der erfindungsgemäßen Emulgiervorrichtung auch mit einer kalten Emulsion zusammengeführt und hierdurch weiterverarbeitet werden.

Gemäß einem Aspekt der vorliegenden Erfindung weist die Emulgiervorrichtung eine Luftfördereinrichtung auf, welche ausgebildet ist, eine Umgebungsluft zu fördern und hierdurch einen Luftstrom zu erzeugen, und die Emulgiervorrichtung weist wenigstens eine Behälterluftzuführung auf, welche ausgebildet ist, den Luftstrom von der Luftfördereinrichtung in den Innenraum des Behälters zu führen. Die Luftfördereinrichtung kann ein Ventilator, ein Gebläse oder ein Kompressor sein, wie weiter unten noch näher beschrieben werden wird.

Diesem Aspekt der vorliegenden Erfindung liegt die Erkenntnis zugrunde, dass bereits Maschinen bekannt sind, welche kalte bzw. gekühlte Luft dazu verwenden, Sahne oder Eiweiß zu schlagen. Bei derartigen Maschinen wird Luft von unten durch den Boden des Behälters in die zu emulgierende Flüssigkeit gepresst bzw. geblasen und die Flüssigkeit dabei gleichzeitig verrührt. Im Vergleich zu anderen Maschinen zur Herstellung geschlagener Sahne wie z.B. Durchlaufsahnemaschinen, bei denen die Sahne durch eine Düse gepresst wird, wird durch das Einpressen bzw. Einblasen der Luft in diesem Fall ein besseres Ergebnis der geschlagenen Sahne erzeugt. Insbesondere kann eine feinere und stabilere Molekülstruktur der geschlagenen Sahne erreicht werden als bei von Hand geschlagener Sahne sowie als bei Sahne aus einer Durchlaufsahnemaschine. Ferner kann ein deutliches größeres Volumen der Sahne-Luft-Emulsion als bei anderen Herstellungsarten erreicht werden.

Wird nunmehr eine derartige Maschine erfindungsgemäß mit einer zusätzlichen Heizfunktion versehen, so können die Vorteile und Eigenschaften der zuvor beschriebenen Erzeugung einer kalten Emulsion, wie z.B. von geschlagener Sahne, beibehalten werden und gleichzeitig die zusätzlichen Vorteile zur Erzeugung einer warmen Emulsion, z.B. aus Eigelb, ergänzt werden. Beispielsweise kann in dem Behälter eine zu emulgierende Flüssigkeit in Form von Eigelb zunächst erhitzt und gegebenenfalls geschlagen werden, um eine entsprechende emulgierte Flüssigkeit zu erhalten. Anschließend kann diese erfindungsgemäß, wie bei der Erzeugung geschlagener Sahne, durch das Einpressen bzw. Einblasen von Umgebungsluft oder sogar von gekühlter Luft heruntergekühlt werden, so dass anschließend eine separat hergestellte geschlagene Sahne bei einer Temperatur in die abgekühlte Eigelbemulsion untergearbeitet werden kann, welche für die Herstellung von Sahne geeignet ist. Hierdurch können diese beiden Arbeitsschritte in einer Vorrichtung vorgenommen werden. Gleichzeitig kann das Volumen des emulgierten Eigelbs durch das Einpressen bzw. Einblasen von Luft vergrößert werden.

Gemäß einem weiteren Aspekt der vorliegenden Erfindung weist die Luftfördereinrichtung einen Kompressor auf. Auf diese Art und Weise kann im Vergleich zu einem Gebläse oder Ventilator ein vergleichsweise starker Luftstrom erzeugt werden, welcher eine entsprechend große Wirkung zur Erzeugung der Emulsion erreichen kann. Auch können in diesem Fall die Luftauslässe wie z.B. Löcher in dem Boden des Behälters vergleichsweise kleinporig ausgebildet sein, so dass die Emulsion nicht in diese Löcher gelangen und gleichzeitig die Luft aufgrund der Stärke des Kompressors durch diese Löcher in die Emulsion geblasen werden kann. Auch kann durch die Kompression der Luft mittels des Kompressors die Luft abgekühlt werden, so dass hierdurch eine geringere Temperatur des Luftstroms erreicht und die Emulsion stärker abgekühlt werden kann.

Gemäß einem weiteren Aspekt der vorliegenden Erfindung weist die Luftfördereinrichtung einen Luftfilter auf. Auf diese Art und Weise kann die Umgebungsluft, welche dem Luftstrom zugrunde liegt, von Staub, Schmutzpartikeln und dergleichen gereinigt werden. Diese können auf diese Art und Weise von der zu emulgierenden Flüssigkeit ferngehalten werden, welche schließlich ein Lebensmittel darstellt.

Gemäß einem weiteren Aspekt der vorliegenden Erfindung ist die Emulgiervorrichtung ausgebildet, die Temperatur des Luftstroms vorbestimmt unterhalb die Temperatur einer Umgebungsluft, vorzugsweise auf unter 8°C, besonders vorzugsweise auf ca. 4°C, abzukühlen. Mit anderen Worten kann eine vorbestimmte Temperatur des Luftstroms von einem Benutzer eingestellt werden, welche an die Erfordernisse des entsprechenden Zubereitungsprozesses angepasst werden kann. Diese Temperatur im Bereich von 8°C und insbesondere im Bereich von ca. 4°C vorzusehen kann den Vorteil bieten, dass z.B. eine warme Eigelbemulsion, welche üblicherweise wenigstens 67°C aufweist, auf eine Temperatur abgekühlt werden kann, welche der bevorzugten Temperatur von geschlagener Sahne entspricht. Auf diese Art und Weise können diese beiden Massen miteinander vermischt werden, wie es für zahlreiche Rezepturen erforderlich ist.

Gemäß einem weiteren Aspekt der vorliegenden Erfindung erfolgt das Abkühlen des Luftstroms mittels wenigstens eines Kühlelements, welche vorzugsweise als eine Wärmepumpe oder als ein Peltier-Element ausgebildet ist. Das Kühlelement kann je nach dem Anwendungsbereich der Emulgiervorrichtung in Abhängigkeit des entsprechenden Temperaturbereichs gewählt werden, auf welchen der Luftstrom abzukühlen ist. Hierzu eine Wärmepumpe oder ein Peltier-Element zu verwenden, kann je nach Anwendungsfall sowie Größe der Emulgiervorrichtung und Masse der zu kühlenden Flüssigkeit unter Abwägung der Leistung und der Anschaffungskosten sowie des Energieverbrauchs zweckmäßig sein.

Gemäß einem weiteren Aspekt der vorliegenden Erfindung ist die Emulgiervorrichtung ferner ausgebildet, die Temperatur des Luftstroms vorbestimmt, vorzugsweise auf wenigstens 67°C, zu erwärmen. Hierdurch kann eine entsprechende Warmluftzufuhr durch den Luftstrom erreicht werden, um beispielsweise eine Eigelbmasse als zu emulgierende Flüssigkeit zum Binden zu bringen, da bei wenigstens 67°C das Albumin des Eigelbs bindet und hierdurch eine dauerhafte Struktur erreicht werden kann. Eine derartige Masse kann für verschiedene Rezepturen erforderlich sein. Auch kann diese emulgierte Masse anschließend abgekühlt werden, um sie, wie zuvor beschrieben, z.B. mit geschlagener Sahne bei einer Temperatur von wenigstens 8°C oder weniger weiterzuverarbeiten. Eine Erwärmung von Eigelb auf diese Temperatur kann auch dahingehend vorteilhaft sein, weil hierdurch Bakterien wie insbesondere eventuelle Salmonellen abgetötet und das emulgierte Eigelb somit pasteurisiert werden kann.

Gemäß einem weiteren Aspekt der vorliegenden Erfindung erfolgt das Erwärmen des Luftstroms mittels wenigstens eines Heizelements, welches vorzugsweise als ein elektrisches Heizelement, als eine Wärmepumpe oder als ein Peltier-Element ausgebildet ist. Auf diese Art und Weise kann je nach Anwendungsfall eine entsprechende Wärmezufuhr an den Luftstrom erfolgen. Hierbei ein elektrisches Heizelement zu verwenden, welches Stromwärmeverluste an den Luftstrom abgibt, kann eine besonders einfache und kostengünstige Variante sein. Alternativ können auch eine Wärmepumpe oder ein Peltier-Element verwendet werden, welche jeweils eine wirkungsvolle Erwärmung des Luftstroms ermöglichen können. Auch können eine Wärmepumpe oder ein Peltier-Element sowohl zu einer Abkühlung, wie zuvor beschrieben, sowie zu einer Erwärmung geeignet sein. Dies kann den Vorteil haben, dass die Wärmepumpe oder das Peltier-Element sowohl zum Abkühlen des Luftstroms als auch zum Erwärmen des Luftstroms verwendet werden können, wie weiter unten noch näher beschrieben werden wird.

Gemäß einem weiteren Aspekt der vorliegenden Erfindung weist die Emulgiervorrichtung wenigstens ein Luftumschaltelement auf, welches ausgebildet ist, der Behälterluftzuführung den Luftstrom wahlweise von dem Heizelement oder von dem Kühlelement zuzuführen. Auf diese Weise kann durch das Heizelement ein warmer Luftstrom und durch das Kühlelement ein kühler Luftstrom erzeugt werden. Durch das Luftumschaltelement kann ausgewählt werden, welcher der beiden Luftströme verwendet werden soll, um dem Innenraum des Behälters zugeführt zu werden. Auf diese Art und Weise kann sowohl die Erzeugung eines warmen Luftstroms als auch eines gekühlten Luftstroms jeweils unabhängig voneinander und optimiert ausgelegt werden. Gleichzeitig kann durch den Benutzer bzw. durch ein Zubereitungsprogramm der Emulgiervorrichtung entschieden werden, welcher der beiden Luftströme dem Innenraum des Behälters zuzuführen ist. Hierdurch können die zuvor beschriebenen Funktionen der Erzeugung einer warmen emulgierten Flüssigkeit, des Abkühlens der warmen emulgierten Flüssigkeit und der Erzeugung einer kalten emulgierten Flüssigkeit wahlweise ausgeführt werden.

Gemäß einem weiteren Aspekt der vorliegenden Erfindung sind das Heizelement und das Kühlelement als gemeinsames Element ausgebildet, welches vorzugsweise als eine Wärmepumpe oder als ein Peltier-Element ausgebildet ist. Alternativ zu dem zuvor beschriebenen Luftumschaltelement kann in diesem Fall auf dieses verzichtet werden, da das gemeinsame Element zur Erzeugung sowohl heißer als auch gekühlter Luft verwendet werden kann. Somit kann die Funktion des gemeinsamen Elements umgeschaltet werden, um wahlweise gekühlte oder erwärmte Luft zu erhalten und diese dem Innenraum des Behälters zuzuführen. Dies kann insbesondere dadurch erreicht werden, dass das gemeinsame Element als Wärmepumpe oder als Peltier-Element ausgebildet ist, welche wahlweise sowohl zur Abkühlung als auch zur Erwärmung verwendet werden können. Auf diese Art und Weise können die zuvor beschriebenen Eigenschaften mit lediglich einem einzigen Element erreicht werden, was einen geringeren Bauraum sowie einen geringeren Aufwand zur Führung der Luft aufweisen kann.

Gemäß einem weiteren Aspekt der vorliegenden Erfindung ist die Emulgiervorrichtung ausgebildet, den Behälter, vorzugsweise einen Boden und bzw. oder eine Wand des Behälters, zu erwärmen, wobei das Erwärmen vorzugsweise mittels wenigstens eines elektrischen Heizelements und bzw. oder mittels Induktion erfolgen kann. Auf diese Art und Weise kann alternativ oder zusätzlich die Erwärmung des Behälters bzw. der in dessen Innenraum befindlichen Flüssigkeit unabhängig von der Erwärmung des Luftstroms erfolgen. Hierzu kann der Behälter und insbesondere dessen Boden mittels eines elektrischen Heizelements mittels Stromwärmeverlusten erwärmt werden, welche auf diese Art und Weise die Flüssigkeit erwärmen können. Dies kann ebenso für eine Wand des Behälters gelten. Alternativ kann insbesondere der Boden des Behälters auch induktiv erwärmt werden. In diesem Fall kann die Erwärmung der Emulsion im Innenraum des Behälters ausschließlich über diese Art und Weise der Erwärmung erfolgen und mit der Zuführung eines ungekühlten Luftstroms bzw. der Umgebungsluft kombiniert werden. Alternativ ist es auch möglich, die Luft erwärmt zuzuführen und eine zusätzliche Erwärmung der im Innenraum des Behälters befindlichen Flüssigkeit auf die zuvor beschriebene Art und Weise der Erwärmung des Behälters zu erreichen. Auch kann eine Erwärmung der Luft dadurch erreicht werden, dass der Luftstrom den erwärmten Boden durchströmt und sich hierdurch teilweise oder vollständig auf die gewünschte Temperatur erwärmt.

Gemäß einem weiteren Aspekt der vorliegenden Erfindung weist die Emulgiervorrichtung wenigstens einen Temperatursensor auf, welcher ausgebildet und angeordnet ist, eine Temperatur des Luftstroms zu erfassen, wobei die Emulgiervorrichtung ausgebildet ist, die Erwärmung des Luftstroms, die Abkühlung des Luftstroms und bzw. oder die Erwärmung des Behälters in Abhängigkeit der erfassten Temperatur des Luftstroms zu regeln. Der Temperatursensor ist hierzu vorzugsweise in dem Bereich angeordnet, in welchem der Luftstrom dem Behälter zugeführt wird, d. h. jenseits des Heizelements, des Kühlelements oder des gemeinsamen Elements.

Die Erfassung der Temperatur kann dabei über alle geeigneten sensorischen Prinzipien erfolgen, welche für die Erfassung der Temperatur eines Luftstroms geeignet sind. Auf diese Art und Weise kann eine Regelung vorgesehen werden, um die Temperatur im Innenraum des Behälters auf einem vorbestimmten Wert zu bringen bzw. auf diesem Wert zu halten. Dieser Wert kann durch ein Programm der Emulgiervorrichtung zur Zubereitung eines Lebensmittels ebenso vorgegeben werden wie von einem Benutzer über eine entsprechende Anzeige- und Bedienvorrichtung der Emulgiervorrichtung. Hierdurch kann erreicht werden, dass der im Innenraum des Behälters befindlichen Flüssigkeit ein Luftstrom mit einer möglichst genau eingestellten vorbestimmten Temperatur zugeführt werden kann, um das entsprechende Ergebnis zu erreichen.

Gemäß einem weiteren Aspekt der vorliegenden Erfindung weist ein Boden des Behälters wenigstens eine Luftzuführung auf, welche ausgebildet ist, einen Luftstrom von der Behälterluftzuführung zugeführt zu bekommen, und der Boden des Behälters weist wenigstens einen Luftauslass, vorzugsweise eine Mehrzahl von Luftauslässen, auf, welcher ausgebildet ist, den Luftstrom von der Behälterluftzuführung über die Luftzuführung in den Innenraum des Behälters zu führen. Dabei kann mit einem Luftauslass bzw. mit einer Luftauslassöffnung ein Emulgieren der Flüssigkeit im Inneren des Behälters erreicht werden. Das Emulgieren kann jedoch wirkungsvoller durchgeführt werden, falls eine Mehrzahl von Luftauslässen verwendet wird. Das Emulgieren der Flüssigkeit kann möglichst gleichmäßig erfolgen, falls die Luftauslässe gleichmäßig verteilt am Boden des Behälters angeordnet sind. Der Luftauslass ist bzw. die Luftauslässe sind vorzugsweise derart klein auszubilden, dass die Luft zwar in die Flüssigkeit gelangen, jedoch die Flüssigkeit nicht in den Luftauslass bzw. in die Luftauslässe eindringen und diesen bzw. diese verstopfen kann. Auf diese Art und Weise kann eine Zuführung des Luftstroms in den Innenraum des Behälters von unten durch den Boden erfolgen, so dass die dort befindliche zu emulgierende Flüssigkeit möglichst vollflächig und gleichmäßig mit Luft emulgiert werden kann. Dies kann für ein gutes Ergebnis des Emulgierens sorgen.

Gemäß einem weiteren Aspekt der vorliegenden Erfindung weist die Emulgiervorrichtung wenigstens ein Rührelement auf, welches ausgebildet ist, im Innenraum des Behälters angeordnet und betrieben zu werden, um die im Innenraum des Behälters aufgenommene Flüssigkeit zu rühren, wobei die Emulgiervorrichtung eine Antriebseinheit aufweist, welche ausgebildet ist, das Rührelement drehend anzutreiben. Durch das Rühren der zu emulgierenden Flüssigkeit bzw. der emulgierten Flüssigkeit kann eine gleichmäßigere Verteilung der entsprechenden Wärme bzw. Kühle erreicht werden ebenso wie eine gleichmäßige Verteilung der zugeführten Luft. Dies kann jeweils das Ergebnis des Emulgierens bzw. der Luftzuführung innerhalb der hierdurch erzeugten Masse verbessern.

Gemäß einem weiteren Aspekt der vorliegenden Erfindung weist das Rührelement wenigstens eine Luftzuführung auf, welche ausgebildet ist, einen Luftstrom von der Behälterluftzuführung zugeführt zu bekommen, und das Rührelement weist wenigstens einen Luftauslass, vorzugsweise eine Mehrzahl von Luftauslässen, auf, welcher ausgebildet ist, den Luftstrom von der Behälterluftzuführung über die Luftzuführung in den Innenraum des Behälters zu führen. Der Luftauslass kann bzw. die Luftauslässe können wie zuvor hinsichtlich des Bodens beschrieben ausgebildet sein.

Die Führung der Luft durch das Rührelement hindurch kann beispielsweise mittels entsprechender Kanäle erfolgen, welche im Inneren des Rührelements ausgebildet sein können. Beispielsweise kann das Rührelement als zweitteiliges Spritzgussteil aus Kunststoff hergestellt werden, so dass die Kanäle aus korrespondierenden Vertiefungen der beiden Spritzgussteile gebildet werden können, welche im zusammengefügten Zustand der beiden Spritzgussteile aufeinander liegen. Wird ein Luftauslass verwendet, so kann dieser vorzugsweise im unteren Bereich des Rührelements und radial von der Drehachse beabstandet angeordnet sein, um dort die Luft auch bei geringen Flüssigkeitsmengen an diese emulgierend abgeben zu können. Werden mehrere Luftauslässe verwendet, so können diese ebenso jedoch radial unterschiedlich verteilt angeordnet werden, um beim Rotieren des Rührelements die Flüssigkeit möglichst gleichmäßig mit Luft emulgieren zu können. Auch können bei der Verwendung mehrerer Luftauslässe diese zusätzlich in der Höhe verteilt angeordnet sein, um auch größere Flüssigkeitsmengen möglichst gleichmäßig mit Luft emulgieren zu können.

Es ist auch möglich, den Luftstrom sowohl durch den Boden des Behälters als auch mittels des Rührelements in den Innenraum des Behälters zu führen. Dies kann eine besonders gleichmäßige Luftzuführung ermöglichen und zu einer entsprechend hohen Qualität des Emulgierens führen. Insbesondere kann hierdurch eine besonders großen Volumenzunahme erreicht werden, da die Luft an vielen unterschiedlichen Stellen in die zu emulgierende Flüssigkeit eingeführt sowie durch das Rühren noch weiter verteilt werden kann.

Zwei Ausführungsbeispiele und weitere Vorteile der Erfindung werden nachstehend im Zusammenhang mit den folgenden Figuren erläutert. Darin zeigt:
- Fig. 1: eine perspektivische schematische Darstellung einer erfindungsgemäßen Emulgiervorrichtung gemäß eines ersten, zweiten und dritten Ausführungsbeispiels;
- Fig. 2: einen Behälter und ein Rührelement der Emulgiervorrichtung der Fig. 1;
- Fig. 3: eine erfindungsgemäße Emulgiervorrichtung gemäß des ersten Ausführungsbeispiels;
- Fig. 4: eine erfindungsgemäße Emulgiervorrichtung gemäß des zweiten Ausführungsbeispiels, und
- Fig. 5: eine erfindungsgemäße Emulgiervorrichtung gemäß des dritten Ausführungsbeispiels.

Die o.g. Figuren werden in kartesischen Koordinaten betrachtet. Es erstreckt sich eine Längsrichtung X, welche auch als Tiefe X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

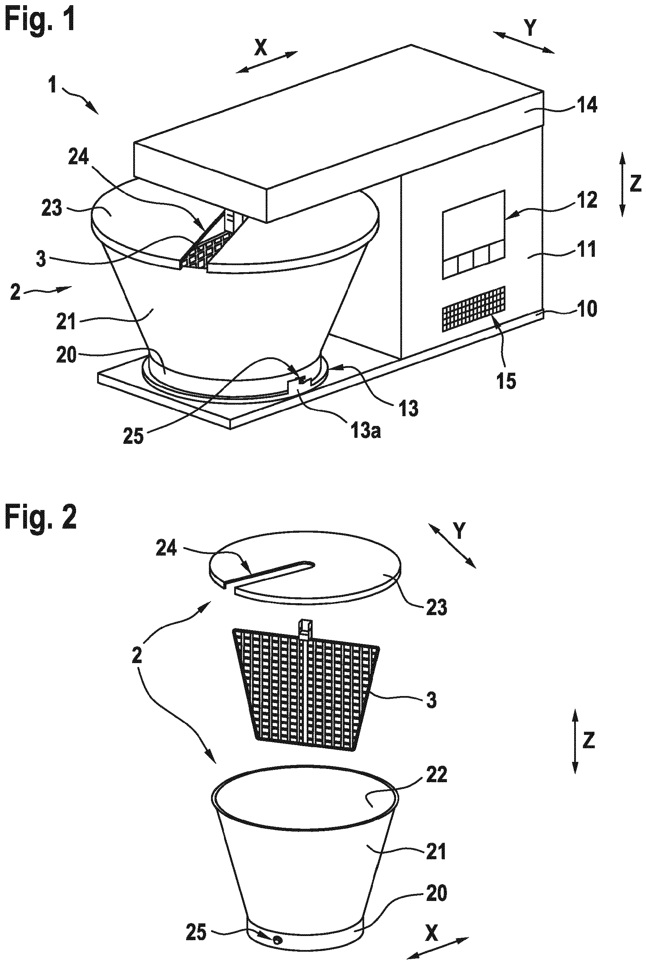

Fig. 1 zeigt eine perspektivische schematische Darstellung einer erfindungsgemäßen Emulgiervorrichtung 1 gemäß eines ersten, zweiten und dritten Ausführungsbeispiels. Fig. 2 zeigt einen Behälter 2 und ein Rührelement 3 der Emulgiervorrichtung 1 der Fig. 1.

Die Emulgiervorrichtung 1 weist eine Grundplatte 10 auf, welche rechteckig und in der Höhe Z flach ausgebildet ist. Mittels der Grundplatte 10 kann die Emulgiervorrichtung 1 auf der Oberfläche eines Untergrunds (nicht dargestellt) angeordnet werden. Ist die Emulgiervorrichtung 1 als mobile Emulgiervorrichtung 1 ausgebildet, so kann die Grundplatte 10 an ihrer Unterseite ein Fahrgestell oder mehrere Rollen aufweisen (nicht dargestellt).

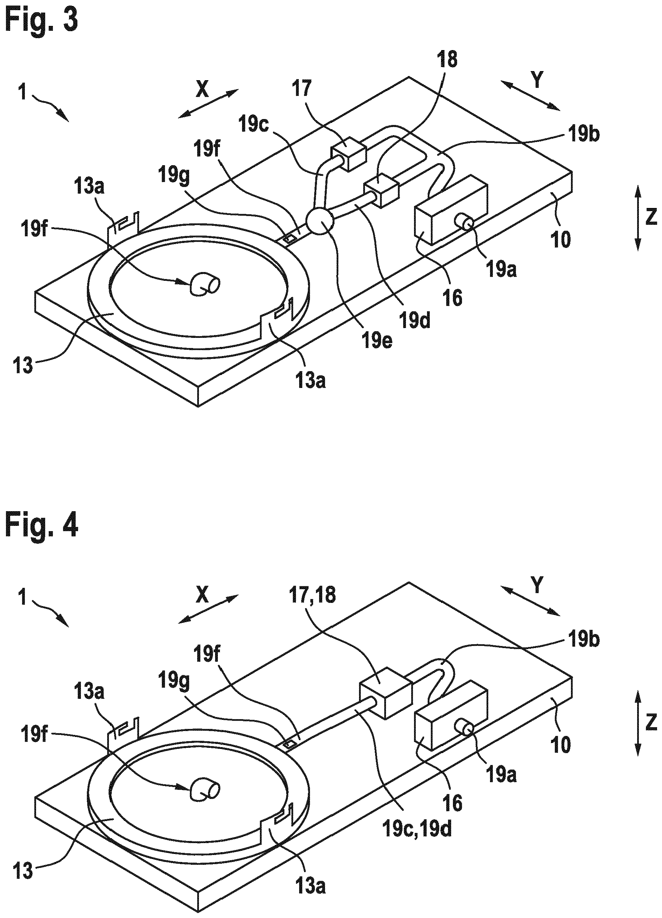

Auf der Oberseite der Grundplatte 10 ist im linken Bereich eine Behälteraufnahme 13 angeordnet, siehe auch Fig. 3, 4 und 5. Von der Behälteraufnahme 13 kann der Behälter 2 aufgenommen werden, siehe Fig. 1. Dabei weist die Behälteraufnahme 13 zwei Behälterarretierungen 13a auf, welche korrespondierend zu zwei Arretierungselementen 25 des Behälters ausgebildet sind, siehe Fig. 2. Die beiden Arretierungselemente 25, welche 180° zueinander versetzt in der Umfangsrichtung angeordnet sind und radial vom Rand eines Bodens 20 des Behälters 2 nach außen zeigen, können in korrespondierende Aufnahmen der Behälterarretierungen 13a eingreifen und dort formschlüssig einrasten. Auf diese Art und Weise kann der Behälter 2 sicher feststehend auf der Behälteraufnahme 13 der Emulgiervorrichtung 1 aufgenommen werden, um dort betrieben zu werden, wie weiter unten noch näher beschrieben werden wird.

Im rechten Bereich der Grundplatte 10 ist auf der Grundplatte 10 ein Gehäuse 11 angeordnet, dessen Inhalt in den Fig. 3 und 4 näher betrachtet werden wird. Nach außen hin weist das Gehäuse 11 ein Anzeige- und Bedienelement 12 auf, welches einem Benutzer zugewandt ist. Über das Anzeige- und Bedienelement 12 können dem Benutzer Informationen wie z.B. eine Temperatur, eine Drehzahl und dergleichen angezeigt werden, wie weiter unten noch näher erläutert werden wird. Ebenso kann von dem Benutzer über das Anzeige- und Bedienelement 12 eine Möglichkeit gegeben werden, den Betrieb der Emulgiervorrichtung 1 zu beeinflussen, wie weiter unten noch näher beschrieben werden wird. Das Anzeige- und Bedienelement 12 ist vorzugsweise in Form eines berührungsempfindlichen Bildschirms ausgebildet, was die Flexibilität der Anordnung der gezeigten Informationen sowie der Eingabemöglichkeiten für den Benutzer erhöhen kann. Unterhalb des Anzeige- und Bedienelements 12 ist einen Lufteinlass 15 vorgesehen, über den Umgebungsluft in das Innere des Gehäuses 11 gelangen kann, wie weiter unten noch näher beschrieben werden wird.

Auf der Oberseite des Gehäuses 11 ist eine Antriebseinheit 14 angeordnet, welche sich in der Längsrichtung X nach links hin über den Behälter 2 erstreckt. An der Antriebseinheit 14 kann das Rührelement 3 in Form eines Rührgitters 3 angebracht werden, um durch die Antriebseinheit 14 um dessen Rotationsachse gedreht zu werden. Das Rührgitter 3 kann dabei in einem Innenraum 22 des Behälters 2 angeordnet werden. Der Innenraum 22 wird von dem Boden 20 sowie einer Wand 21 des Behälters 2 gebildet und ist in der Höhe Z nach oben offen. In dem Innenraum 22 kann eine zu emulgierende Flüssigkeit aufgenommen werden. Der Innenraum 22 kann nach oben durch einen Behälterverschluss 23 in Form eines Deckels 23 im Wesentlichen abgedeckt werden, wobei der Deckel 23 eine Rührelementdurchführung 24 in schlitzförmiger Form aufweist, um das obere Ende des Rührgitters 3, welches von der Antriebseinheit 14 aufgenommen wird, durch den Deckel 23 hindurchzuführen.

Eine derartige Emulgiervorrichtung 1 kann dazu verwendet werden, in den Innenraum 22 des Behälters 2, welcher auch als Kessel 2 bezeichnet werden kann, eine zu emulgierende Flüssigkeit wie z.B. eine Eigelbmasse einzufüllen. Diese Eigelbmasse kann im Innenraum 22 des Behälters 2 mittels des Rührgitters 3 umlaufend verrührt werden, wenn das Rührgitter 3 von der Antriebseinheit 14 der Emulgiervorrichtung 1 angetrieben wird. Die zum Emulgieren erforderliche Wärme kann erfindungsgemäß dabei wie folgt erzeugt werden.

Gemäß dem ersten Ausführungsbeispiel der erfindungsgemäßen Emulgiervorrichtung 1, vgl. Fig. 3, ist im Inneren des Gehäuses 11 eine erste Luftzuführung 19a in Form eines Schlauches vorgesehen, welche den Lufteinlass 15 mit einer Luftfördereinrichtung 16 in Form eines Kompressors 16 luftführend verbindet. Mittels des Kompressors 16 kann Umgebungsluft von dem Lufteinlass 15 durch die erste Luftzuführung 19a angesogen und über eine zweite Luftzuführung 19b von dem Kompressor 16 abgegeben werden.

Die zweite Luftzuführung 19b ist zum einen mit einem Heizelement 17 und zum anderen mit einem Kühlelement 18 verbunden. Das Heizelement 17 ist dazu ausgebildet, die seitens der zweiten Luftzuführung 19b zugeführte Umgebungsluft zu erwärmen. Hierzu kann das Heizelement 17 als Wärmepumpe 17, als Peltier-Element 17 oder als elektrisches Heizelement 17 ausgebildet sein. Dabei kann die Erwärmung der Luft durch das Heizelement 17 auf eine vorbestimmte Temperatur erfolgen, welche durch ein Programm der Emulgiervorrichtung 1 vorgegeben sein kann. Alternativ kann die Temperatur auch über das Anzeige- und Bedienelement 12 von dem Benutzer vorgegeben werden. Die erzeugte erwärmte Luft kann von dem Heizelement 17 über eine Heißluftabführung 19c abgeführt werden.

Vergleichbar kann das Kühlelement 18 dazu verwendet werden, die über die zweite Luftführung 19b zugeführte Umgebungsluft abzukühlen. Auch dies kann auf eine Temperatur erfolgen, welche seitens der Emulgiervorrichtung 1 oder seitens des Benutzers vorgegeben werden kann. Das Kühlelement 18 kann ebenfalls als Wärmepumpe 18 oder als Peltier-Element 18 ausgebildet sein. Die gekühlte Luft kann von dem Kühlelement 18 über eine Kaltluftabführung 19d abgegeben werden.

Die Heißluftabführung 19c und die Kaltluftabführung 19d laufen an einem Luftumschaltelement 19e zusammen. Das Luftumschaltelement 19e ist dazu ausgebildet, zwischen den beiden zugeführten Luftströmen umzuschalten. Das Luftumschaltelement 19e ist ferner mit einer Behälterluftzuführung 19f verbunden, welche unterhalb der Behälteraufnahme 13 hindurch geführt wird und etwa mittig in der Behälteraufnahme 13 derart endet, dass die Luft von dort dem Boden 20 des Behälters 2 zugeführt werden kann, wenn dieser von der Behälteraufnahme 13 aufgenommen wird. Der Boden 20 des Behälters 2 weist eine entsprechende Luftführung sowie eine Mehrzahl von Luftauslässen auf (nicht dargestellt), durch welche hindurch die Luft in den Innenraum 22 des Behälters 2 gelangen und die dort befindliche Flüssigkeit bzw. Massen erreichen kann. Je nach Schaltstellung des Luftumschaltelements 19e kann dabei die heiße Luft der Heißluftabführung 19c oder die kalte Luft der Kaltluftabführung 19d als Luftstrom in den Innenraum 22 des Behälters gelangen.

Im Bereich der Behälterluftzuführung 19f ist ein Temperatursensor 19g angeordnet, welcher ausgebildet ist, die Temperatur des Luftstroms zu erfassen, welcher durch die Behälterluftzuführung 19f geführt wird. Auf diese Art und Weise kann eine Regelung der Temperatur des Luftstroms erfolgen, um die seitens der Emulgiervorrichtung 1 bzw. des Benutzers vorgegebene Temperatur möglichst genau einzuhalten.

Alternativ können gemäß des zweiten Ausführungsbeispiels die Funktionen des Heizelements 19 und des Kühlelements 18 in einem gemeinsamen Element 17, 18 kombiniert werden, siehe Fig. 4. Dies kann insbesondere dadurch erreicht werden, dass das gemeinsame Element 17, 18 als Wärmepumpe 17, 18 oder als Peltier-Element 17, 18 ausgebildet ist. Bei derartigen Elementen 17, 18 kann eine Änderung der Funktion zwischen der Erzeugung der heißen Luft und der Erzeugung gekühlter Luft durch die Veränderung des entsprechenden Betriebsmodus erreicht werden. Beispielsweise kann bei einem Peltier-Element 17, 18 die Richtung der Stromzuführung geändert werden, um zwischen der Erzeugung von Wärme und von Kälte zu unterscheiden. In diesem Fall ist die zweite Luftzuführung 19b mit dem gemeinsamen Element 17, 18 direkt verbunden und es kann auf das Luftumschaltelement 19e verzichtet werden, da die Heißluftabführung 19c und die Kaltluftabführung 19d ebenfalls gemeinsam ausgebildet sind. Die Umschaltung der Funktion des gemeinsamen Elements 17, 18 zwischen Kühlung und Erwärmung kann durch die Emulgiervorrichtung 1 bzw. den Benutzer erfolgen.

Erfindungsgemäß kann gemäß des ersten und des zweiten Ausführungsbeispiels der Fig. 3 bis 4 die Erzeugung einer warmen Emulsion, wie z.B. von Eigelb, dadurch erfolgen, dass die Eigelbflüssigkeit als zu emulgierende Flüssigkeit in den Innenraum 22 des Behälters 2 gegeben wird. Der Behälter 2 kann dann mit seinem Boden 20 auf der Behälteraufnahme 13 der Emulgiervorrichtung 1 angeordnet und dort arretiert werden. Hierzu können beiden Behälterarretierungen 13a der Behälteraufnahme 13 sowie die beiden Arretierungselemente 25 des Bodens 20 des Behälters 2 verwendet werden.

Anschließend kann das Rührgitter 3, welches bereits von der Antriebseinheit 14 der Emulgiervorrichtung aufgenommen ist, in den Innenraum 22 des Behälters 2 eingesetzt werden. Hierzu kann die Antriebseinheit 14 gegenüber dem Gehäuse 11 schwenkbar ausgebildet sein, so dass von der Antriebseinheit 14 aufgenommene Rührgitter 3 von oben in den Innenraum 22 des Behälters 2 hinein geschwenkt werden kann. Anschließend kann der Deckel 23 auf den Behälter 2 aufgesetzt werden, wobei das obere Ende des Rührgitters 3 durch die Rührelementdurchführung 24 des Deckels 23 geführt wird, siehe Fig. 1.

Nun kann die Eigelbmasse als zu emulgierende Flüssigkeit mittels des Rührgitters 3 im Innenraum 22 des Behälters 2 gerührt werden. Gleichzeitig kann von dem Kompressor 16 Umgebungsluft angesogen und über die zweite Luftzuführung 19b dem Heizelement 17 zugeführt werden. Die zugeführte Umgebungsluft kann vom dem Heizelement 17 auf wenigstens 67°C erwärmt werden, um ein Binden von Eigelb zu ermöglichen. Auch kann bei dieser Temperatur ein pasteurisieren des Eigelbs erfolgen, so dass Bakterien wie z.B. eventuell vorhandene Salmonellen im Eigelb abgetötet werden können.

Die durch das Heizelement 17 erwärmte Luft kann als Luftstrom durch die Heißluftabführung 19c dem Luftumschaltelement 19e zugeführt werden, welches diese über die Behälterluftzuführung 19f dem Boden 20 des Behälters 2 zuführt. Von dort kann die warme Luft durch eine Mehrzahl von gleichmäßig verteilten Luftauslässen bzw. Luftauslassöffnungen des Bodens 20 des Behälters 2 von unten in die Eigelbflüssigkeit gelangen. Die Wärme der Luft kann auf die Eigelbflüssigkeit übergehen und diese zum Binden und Stocken bringen. Gleichzeitig kann durch das Rühren die Wärme sowie die Luft möglichst gleichmäßig in der Eigelb-Luft-Emulsion verteilt werden, um ein entsprechend gleichmäßiges Ergebnis des Emulgierens zu erhalten.

Ist die zu emulgierende Eigelbflüssigkeit zu einer emulgierten Eigelbmasse verarbeitet worden, kann das Abkühlen der emulgierten Eigelbmasse beginnen. Hierzu kann die Luft der zweiten Luftzuführung 19b von dem Kühlelement 18 gekühlt und über die Kaltluftabführung 19d dem Luftumschaltelement 19e zugeführt werden, welches nun diesen gekühlten Luftstrom der Behälterluftzuführung 19f zuführt. Unter weiterem Rühren durch das Rührgitter 3 kann nun gekühlte Luft in die emulgierte warme Eigelbmasse gelangen und diese entsprechend abkühlen. Auch dies kann unter stetigem Rühren erfolgen, um gekühlte Luft möglichst gleichzeitig in der emulgierten Eigelbmasse zu verteilen und diese so möglichst gleichmäßig abzukühlen.

Dies kann fortgeführt werden, bis die emulgierte Eigelbmasse eine gewünschte Temperatur z.B. im Bereich von wenigstens 8°C und vorzugsweise ca. 4°C erreicht hat. Nun kann der Behälter 2 mit der abgekühlten emulgierten Eigelbmasse aus der Emulgiervorrichtung 1 entnommen werden, um die emulgierte Eigelbmasse dem Behälter 2 zu entnehmen und z.B. mit geschlagener Sahne in einem weiteren Behälter zu verarbeiten. Alternativ kann die geschlagene Sahne auch in den Innenraum 22 des Behälters 2 gegeben werden, welcher sich weiterhin auf der Behälteraufnahme 13 der Emulgiervorrichtung 1 befindet, um dort mit der abgekühlten emulgierten Eigelbmasse weiter verarbeitet zu werden. Auch dies kann unter Einwirkung des Rührgitters 3 erfolgen. Auf diese Weise kann auch dieser Verarbeitungsschritt von der Emulgiervorrichtung 1 durchgeführt und die abgekühlte emulgierte Eigelbmasse mit der gekühlten geschlagenen Sahne im Innenraum 22 des Behälters 2 verbunden werden. Es können auch weitere Zutaten für die weitere Verarbeitung verwendet und der emulgierten Eigelbmasse zugegeben werden.

Alternativ könnte gemäß dem zweiten Ausführungsbeispiel der vorliegenden Erfindung auch die Erzeugung der warmen Luft sowie der gekühlten Luft über das gemeinsame Element 17, 18 gemäß der Fig. 4 erfolgen, wie oben beschrieben wurde.

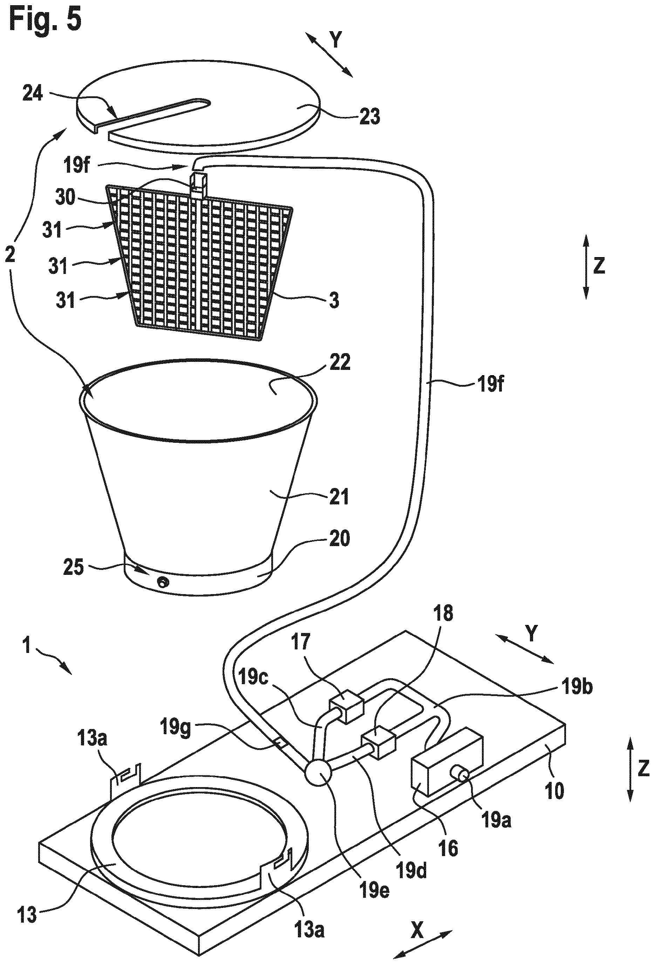

Gemäß des dritten Ausführungsbeispiels der Fig. 5, welches auf dem ersten Ausführungsbeispiel der Fig. 3 basiert, kann der Luftstrom mittels der Behälterluftzuführung 19f auch dem Rührgitter 3 zugeführt werden. Das Rührgitter 3 weist hierzu entlang seiner Drehachse am oberen Ende eine Luftzuführung 30 in Form einer Öffnung 30 auf, welche von einer Halterung umgeben wird, mit welcher das Rührgitter 3 von der Antriebseinheit 14 gehalten und rotiert werden kann (nicht dargestellt). Die Luftzuführung 30, welche sich mit dem Rührgitter 3 mitbewegen kann, kann mittels einer Dichtung mit der stehend angeordneten Behälterluftzuführung 19f verbunden sein, um auch im Betrieb, d.h. bei Rotieren des Rührgitters 3, eine luftdichte Verbindung zwischen der Behälterluftzuführung 19f der Antriebseinheit 14 und der Luftzuführung 30 des Rührgitters 3 herzustellen.

Von der Luftzuführung 30 weg erstreckt sich im Inneren des Rührgitters 3 eine Mehrzahl von Hohlräumen in Form von Kanälen, welche von der Luftzuführung 30 zu einer Mehrzahl von Luftauslässen 31 führen. Durch diese Kanäle hindurch kann der Luftstrom von der Behälterluftzuführung 19f in das Innere des Behälters 3 gelangen und an die dort befindliche Flüssigkeit abgegeben werden. Die Luftauslässe 31 sind in der radialen Richtung sowie in der Höhe Z möglichst gleichmäßig über die Gitterstruktur des Rührgitters 3 verteilt angeordnet, um durch das Rotieren des Rührgitters 3 eine möglichst gleichmäßige Lufteinbringung in die zu emulgierende Flüssigkeit zu erreichen.

In jedem Fall kann erfindungsgemäß durch die Verwendung der erfindungsgemäßen Emulgiervorrichtung 1 eine deutlich schnellere und auch gleichmäßigere Abkühlung der warmen emulgierten Eigelbmasse erreicht werden als z.B. bei einer Verwendung eines Wasserbads, wie bisher bekannt. Die schnellere Abkühlung kann den gesamten Zubereitungsvorgang beschleunigen. Auch kann durch das beschleunigte Abkühlen ein mögliches weiteres Bakterienwachstum in der emulgierten Eigelbmasse gehemmt werden. Wird dabei die emulgierte Eigelbmasse in dem Behälter 2 der Emulgiervorrichtung 1 belassen und die geschlagene Sahne dort untergearbeitet, so kann eine mögliche Kontaminierung der emulgierten Eigelbmasse durch die Vermeidung der Entnahme aus dem Behälter 2 der Emulgiervorrichtung 1 vermieden werden, da ein derartiger Zwischenschritt nicht erforderlich ist.

Insgesamt kann durch die Verwendung der erfindungsgemäßen Emulgiervorrichtung 1 somit ein Arbeits- und Zeitersparnis erreicht werden. Auch kann ein und dieselbe Emulgiervorrichtung 1 sowohl zur Erzeugung kalter Emulsionen oder warmen Emulsionen sowie zur Erzeugung warmer Emulsionen inklusive deren Weiterverarbeitung mit einer kalten Emulsion verwendet werden. Somit können mehrere Zubereitungsschritte mit einer Emulgiervorrichtung lausgeführt werden, so dass auch die Anschaffung von mehreren Emulgiervorrichtungen, welche jeweils lediglich eine Art von Emulsion erzeugen können, verzichtet werden kann. Dies kann Anschaffungskosten sowie Platz sparen.

Auch kann eine bessere Hygiene der verarbeiteten warmen und kalten Emulsion erreicht werden, da die warme Eigelbmasse schneller abgekühlt sowie direkt in dem Behälter 2 der Emulgiervorrichtung 2 weiterverarbeitet werden kann.

Ferner kann durch das Emulgieren mittels eingeblasener Luft ein besseres Ergebnis des Emulgierens im Vergleich zu eingeführter Luft erreicht werden. Dies kann zu einem größeren Volumen sowie zu einer besseren Standfestigkeit der emulgierten Massen aufgrund einer feineren Molekülstruktur der Emulsion führen.

### BEZUGSZEICHENLISTE (Teil der Beschreibung)

- X: Längsrichtung; Tiefe
- Y: Querrichtung; Breite
- Z: vertikale Richtung; Höhe

- 1: Emulgiervorrichtung
- 10: Grundplatte
- 11: Gehäuse
- 12: Anzeige-/Bedienelement
- 13: Behälteraufnahme
- 13a: Behälterarretierung
- 14: Antriebseinheit
- 15: Lufteinlass
- 16: Luftfördereinrichtung; Kompressor
- 17: Heizelement; Wärmepumpe; Peltier-Element; elektrisches Heizelement
- 18: Kühlelement; Wärmepumpe; Peltier-Element
- 19a: erste Luftzuführung
- 19b: zweite Luftzuführung
- 19c: Heizluftabführung
- 19d: Kaltluftabführung
- 19e: Luftumschaltelement
- 19f: Behälterluftzuführung
- 19g: Temperatursensor

- 2: Behälter; Kessel
- 20: Boden
- 21: Wand
- 22: Innenraum
- 23: Behälterverschluss; Deckel
- 24: Rührelementdurchführung des Behälterverschlusses 23
- 25: Arretierungselement

- 3: Rührelement; Rührgitter
- 30: Luftzuführung; Öffnung
- 31: Luftauslässe; Löcher

## Patentansprüche

1. Emulgiervorrichtung (1)
mit wenigstens einem Behälter (2) mit einem Innenraum (22) zur Aufnahme einer zu emulgierenden Flüssigkeit,
wobei die Emulgiervorrichtung (1) ausgebildet ist, die im Innenraum (22) des Behälters (2) aufgenommene Flüssigkeit derart zu erwärmen, dass die Flüssigkeit emulgieren kann,
**dadurch gekennzeichnet, dass**
die Emulgiervorrichtung (1) ferner ausgebildet ist, die im Innenraum (22) des Behälters (2) aufgenommene emulgierte Flüssigkeit aktiv abzukühlen.

2. Emulgiervorrichtung (1) nach Anspruch 1, **gekennzeichnet durch**
eine Luftfördereinrichtung (16), welche ausgebildet ist, eine Umgebungsluft zu fördern und hierdurch einen Luftstrom zu erzeugen, und durch
wenigstens eine Behälterluftzuführung (19f), welche ausgebildet ist, den Luftstrom von der Luftfördereinrichtung (16) in den Innenraum (22) des Behälters (2) zu führen.

3. Emulgiervorrichtung (1) nach Anspruch 2, **dadurch gekennzeichnet, dass**
die Luftfördereinrichtung (16) einen Kompressor (16) aufweist.

4. Emulgiervorrichtung (1) nach Anspruch 2 oder 3, **dadurch gekennzeichnet, dass**
die Luftfördereinrichtung (16) einen Luftfilter aufweist.

5. Emulgiervorrichtung (1) nach einem der Ansprüche 2 bis 4, **dadurch gekennzeichnet, dass**
die Emulgiervorrichtung (1) ausgebildet ist, die Temperatur des Luftstroms vorbestimmt unterhalb die Temperatur einer Umgebungsluft, vorzugsweise auf unter 8°C, besonders vorzugsweise auf ca. 4°C, abzukühlen.

6. Emulgiervorrichtung (1) nach Anspruch 5, **dadurch gekennzeichnet, dass**
das Abkühlen des Luftstroms mittels wenigstens eines Kühlelements (18) erfolgt, welches vorzugsweise als eine Wärmepumpe (18) oder als ein Peltier-Element (18) ausgebildet ist.

7. Emulgiervorrichtung (1) nach einem der Ansprüche 2 bis 6, **dadurch gekennzeichnet, dass**
die Emulgiervorrichtung (1) ferner ausgebildet ist, die Temperatur des Luftstroms vorbestimmt, vorzugsweise auf wenigstens 67°C, zu erwärmen.

8. Emulgiervorrichtung (1) nach Anspruch 7, **dadurch gekennzeichnet, dass**
das Erwärmen des Luftstroms mittels wenigstens eines Heizelements (17) erfolgt, welches vorzugsweise als ein elektrisches Heizelement (17), als eine Wärmepumpe (17) oder als ein Peltier-Element (17) ausgebildet ist.

9. Emulgiervorrichtung (1) nach einem der Ansprüche 6 bis 8, **gekennzeichnet durch**
wenigstens ein Luftumschaltelement (19e), welches ausgebildet ist, der Behälterluftzuführung (19f) den Luftstrom wahlweise von dem Heizelement (17) oder von dem Kühlelement (18) zuzuführen.

10. Emulgiervorrichtung (1) nach einem der Ansprüche 6 bis 8, **dadurch gekennzeichnet, dass**
das Heizelement (17) und das Kühlelement (18) als gemeinsames Element (17, 18) ausgebildet sind, welches vorzugsweise als eine Wärmepumpe (17, 18) oder als ein Peltier-Element (17, 18) ausgebildet ist.

11. Emulgiervorrichtung (1) nach einem der vorangehenden Ansprüche, **dadurch gekennzeichnet, dass**
die Emulgiervorrichtung (1) ausgebildet ist, den Behälter (2), vorzugsweise einen Boden (20) und/oder eine Wand (21) des Behälters (2), zu erwärmen,
wobei das Erwärmen vorzugsweise mittels wenigstens eines elektrischen Heizelements und/oder mittels Induktion erfolgen kann.

12. Emulgiervorrichtung (1) nach einem der Ansprüche 2 bis 11, **gekennzeichnet durch**
wenigstens einen Temperatursensor (19g), welcher ausgebildet und angeordnet ist, eine Temperatur des Luftstroms zu erfassen,
wobei die Emulgiervorrichtung (1) ausgebildet ist, die Erwärmung des Luftstroms, die Abkühlung des Luftstroms und/oder die Erwärmung des Behälters (2) in Abhängigkeit der erfassten Temperatur des Luftstroms zu regeln.

13. Emulgiervorrichtung (1) nach einem der Ansprüche 2 bis 12, **dadurch gekennzeichnet, dass**
ein Boden (20) des Behälters (2) wenigstens eine Luftzuführung aufweist, welche ausgebildet ist, einen Luftstrom von der Behälterluftzuführung (19f) zugeführt zu bekommen, und dass
der Boden (20) des Behälters (2) wenigstens einen Luftauslass, vorzugsweise eine Mehrzahl von Luftauslässen, aufweist, welcher ausgebildet ist, den Luftstrom von der Behälterluftzuführung (19f) über die Luftzuführung in den Innenraum (22) des Behälters (2) zu führen.

14. Emulgiervorrichtung (1) nach einem der vorangehenden Ansprüche, **gekennzeichnet durch**
wenigstens ein Rührelement (3), welches ausgebildet ist, im Innenraum (22) des Behälters (2) angeordnet und betrieben zu werden, um die im Innenraum (22) des Behälters (2) aufgenommene Flüssigkeit zu rühren,
wobei die Emulgiervorrichtung (1) eine Antriebseinheit (14) aufweist, welche ausgebildet ist, das Rührelement (3) drehend anzutreiben.

15. Emulgiervorrichtung (1) nach Anspruch 14, **dadurch gekennzeichnet, dass**
das Rührelement (3) wenigstens eine Luftzuführung (30) aufweist, welche ausgebildet ist, einen Luftstrom von der Behälterluftzuführung (19f) zugeführt zu bekommen, und dass
das Rührelement (3) wenigstens einen Luftauslass (31), vorzugsweise eine Mehrzahl von Luftauslässen (31), aufweist, welcher ausgebildet ist, den Luftstrom von der Behälterluftzuführung (19f) über die Luftzuführung (30) in den Innenraum (22) des Behälters (2) zu führen.
